# DEMANDE DE BREVET EUROPEEN

(11) **EP 4 674 604 A1**
(43) Date de publication de la demande: **07.01.2026**
(21) Numéro de dépôt: 25184937.8
(22) Date de dépôt: 24.06.2025
(51) Int. Cl.: B29C 70/20, B29C 70/32, B29D 23/00, B29C 70/00, B29C 70/52, B29L 23/00

(54) **PROCÉDÉ À FIABILITÉ AUGMENTÉE DE FABRICATION D'UNE STRUCTURE TUBULAIRE COMPOSITE COMBINANT PULTRUSION ET ENROULEMENT FILAMENTAIRE**

(30) Priorité: 01.07.2024 FR 2407159
(71) Demandeur: Epsilon Composite, 33340 Gaillan-en-Médoc (FR)
(72) Inventeur: CHAUMET, Yann, 33340 Gaillan-en-Médoc (FR); PORTOLES, José, 33340 Queyrac (FR)
(74) Mandataire: Novagraaf Technologies

(57) **Abrégé**

La présente invention a pour objet un procédé pour la réalisation d'une structure composite tubulaire d'axe longitudinal (AX), le procédé comprenant successivement :
- une étape de formation d'un brut de fabrication (10) moyennant la construction par empilement de matière d'au moins un sandwich tubulaire (S) d'axe longitudinal (AX), ledit sandwich tubulaire (S) comprenant deux couches d'enroulement filamentaire (11, 14) à base de résine crue et fibres de carbone, et une série d'entretoises pultrudées (13) à base de fibres de carbone et résine au moins partiellement cuite, les entretoises pultrudées (13) étant agencées radialement à l'axe longitudinal (AX) entre les deux couches d'enroulement filamentaire (11, 14) ; et
- une étape de cuisson du brut de fabrication (10) pour obtenir la structure tubulaire composite.

## Description

### DOMAINE TECHNIQUE DE L'INVENTION

La présente invention s'inscrit dans le domaine général des matériaux composites. Elle se rapporte plus particulièrement à un procédé de fabrication d'un rouleau en matériau composite formé d'au moins un sandwich se présentant sous la forme d'une série annulaire de raidisseurs, ou entretoises, pultrudés interposée entre deux couches composites réalisées par enroulement filamentaire.

### ARRIERE-PLAN TECHNIQUE

Les rouleaux tournants, classiquement formés en métal comme l'acier ou l'aluminium, sont des équipements largement utilisés dans l'industrie pour diverses applications, comme l'impression et la transformation du papier, la fabrication de films techniques, ou encore le travail du textile non-tissé.

En pratique, les besoins accrus en cadence de production impliquent d'augmenter toujours davantage la laize et/ou la vitesse de rotation de ces rouleaux.

Cette tendance se heurte néanmoins à une limite {masse - inertie - raideur} des rouleaux en métal : l'augmentation visée de laize et/ou de vitesse de rotation ne peut pas être atteinte sans que ces rouleaux soient soumis à de la déformation inopinée sous charge, des comportement parasites vibratoires ou encore des défauts de stabilité d'axe, conduisant à une perte en qualité de production.

L'étude des solutions permettant de lever ces facteurs limitants pour l'amélioration de la production a mis en évidence l'intérêt d'utiliser les matériaux composites pour se substituer au métal dans la fabrication des rouleaux tournants. De raideur supérieure pour une masse inférieure à l'acier, les matériaux composites à base de fibres de carbone ont été retenus comme particulièrement adaptés.

Sur cette base, il a été initialement proposé de fabriquer intégralement les rouleaux par enroulement filamentaire, consistant à enrouler des fibres de carbone continues et imprégnées de résine autour d'un mandrin en rotation.

Cette technique permet de fabriquer des rouleaux tournants homogènes et significativement plus performants que ceux obtenus avec le travail du métal. Par exemple, dans le secteur de l'impression par flexographie, la vitesse de rotation des rouleaux a pu être poussée de 150 à 250 m/min pour une laize passant de 900 à 1200mm.

La recherche continue en performances a conduit les inventeurs de la présente invention à proposer un procédé de mise en forme multi-matériaux désigné « enroulement -pultrusion ». Ce procédé d'enroulement-pultrusion consiste, comme son nom l'indique, à combiner la technique d'enroulement filamentaire avec la technique dite de pultrusion. La technique de pultrusion repose sur l'obtention d'une pièce par imprégnation et liaison, au moyen d'une même matrice polymérique, de fibres de carbone à partir de faisceaux.

Le procédé « d'enroulement -pultrusion », connu du document FR2871215B1, consiste à produire les rouleaux sous la forme d'au moins un sandwich multi-matériaux comprenant deux couches tubulaires réalisées par enroulement filamentaire et une série d'entretoises pultrudées interposées entre ces deux couches d'enroulement.

Le document GB2602033 décrit un procédé de fabrication d'un corps de rotor destiné à une voile rotative. Le procédé décrit dans GB2602033 comprend l'enroulement de premières fibres autour d'un mandrin afin de former une peau tubulaire définissant un tube de rotor ayant un axe longitudinal ; la réalisation de plusieurs bandes à partir de deuxièmes fibres ; et la fixation de ces bandes sur la surface de la première peau, de manière que certaines des deuxièmes fibres s'étendent selon l'axe du corps de rotor.

En pratique, adjoindre des entretoises pultrudées entre deux couches d'enroulement filamentaire permet de fabriquer des rouleaux de raideur significativement plus élevée que celle des rouleaux obtenus par enroulement filamentaire seul. Aussi, un tel assemblage multi-matériaux permet, par nature, de limiter les phénomènes vibratoires, entendu que les fréquences propres des entretoises pultrudées ne se superposent pas avec celles des deux couches d'enroulement.

Ce procédé d'enroulement-pultrusion permet ainsi d'offrir aux industriels des rouleaux de laize supérieure et/ou pouvant être entraînés en rotation à des vitesses encore plus élevées que dans le cas d'une fabrication reposant uniquement sur la technique d'enroulement filamentaire, tout en maintenant une qualité de production optimale.

Cependant, les essais de contrôle qualité effectués en production ont mis en évidence que certains des rouleaux fabriqués présentent un abattement important des propriétés mécaniques par rapport au potentiel théorique attendu, pouvant conduire dans un cas critique à une mise au rebut pour défaut de conformité avec le cahier des charges imposé. Il s'ensuit que la mise en œuvre du procédé d'enroulement-pultrusion est perfectible.

L'invention s'inscrit ainsi dans une démarche de perfectionnement du procédé d'enroulement-pultrusion moyennant une compréhension du phénomène observé et la définition sur cette base des paramètres de mise en œuvre permettant de tendre vers une production plus fiable.

### EXPOSÉ DE L'INVENTION

À cet effet, l'invention a pour objet un procédé pour la réalisation d'une structure composite tubulaire d'axe longitudinal, comme par exemple un tube composite de révolution autour de l'axe longitudinal, le procédé comprenant successivement :
- une étape de formation d'un brut de fabrication moyennant la construction par empilement de matière d'au moins un sandwich tubulaire d'axe longitudinal, ledit sandwich tubulaire comprenant deux couches d'enroulement filamentaire à base de résine crue et fibres de carbone, et une série d'entretoises pultrudées à base de fibres de carbone et résine au moins partiellement cuite, les entretoises pultrudées étant agencées radialement à l'axe longitudinal entre les deux couches d'enroulement filamentaire ; et
- une étape de cuisson du brut de fabrication pour obtenir la structure tubulaire composite ;
   dans lequel les entretoises pultrudées et les couches d'enroulement filamentaire du brut de fabrication sont paramétrées de sorte à garantir que la structure composite, obtenue après l'étape de cuisson, présente un module longitudinal, un module longitudinal spécifique et un module transverse satisfaisant à la double conditions :
- le module longitudinal spécifique est compris entre 52 300 KNm/Kg et 258 400 KNm/Kg ; et
- un ratio entre le module longitudinal et le module transverse est compris entre 5 et 65.

Selon d'autres caractéristiques de l'invention :
- ledit au moins un sandwich du brut de fabrication est formé durant l'étape de construction de sorte à respecter une distribution volumique de fibres de carbone de plus de 35% dans les entretoises pultrudés et de moins de 65% dans les couches d'enroulement filamentaire, rapportée au volume total de fibres de carbone dans le brut de fabrication ;
- les couches d'enroulement sont formées durant l'étape de construction du brut de fabrication en respectant un angle de dépose des fibres qui est supérieur à 30° par rapport à l'axe longitudinal ;
- les entretoises utilisées pour former ledit au moins un sandwich durant l'étape de construction du brut de fabrication présentent une fraction volumique de fibres supérieure à 65% ;
- les entretoises présentent une fraction volumique de fibres comprise entre 65% et 75% ;
- les entretoises et les couches d'enroulement sont paramétrées de manière à présenter une résistance en lapshear et en traction radiale à leur interface qui est supérieure à 15 MPa à l'issue de l'étape de cuisson du brut de fabrication ;
- l'étape de construction du brut de fabrication est opérée en :
   -- rapportant des entretoises qui sont conformée à base de résine époxy à durcisseur anhydride et ;
   -- formant des couches d'enroulement filamentaire à base d'époxy à durcisseur amine ;
- la résine des entretoises utilisées durant l'étape de construction du brut de fabrication présente un taux de cuisson compris entre 70% à 90% ;
- la résine des entretoises utilisées durant l'étape de construction du brut de fabrication présente un taux de cuisson compris entre 75% et 85% ;
- les entretoises et les couches d'enroulement sont paramétrées de manière à présenter une résistance à la fissuration à leur interface au moins supérieure à 100 J/m², avantageusement supérieure à 150 J/m², à l'issue de l'étape de cuisson du brut de fabrication.

### BRÈVE DESCRIPTION DES DESSINS

D'autres caractéristiques et avantages de l'invention apparaitront au cours de la lecture de la description détaillée qui va suivre pour la compréhension de laquelle on se reportera aux dessins annexés dans lesquels :
- [Fig.1] est une vue schématique partielle et en perspective d'un sandwich composite tubulaire fabriqué conformément au procédé d'enroulement-pultrusion, formé d'une série annulaire d'entretoises pultrudées encapsulée entre deux couches d'enroulement filamentaire ;
- [Fig.2] est une vue en coupe d'un rouleau fabriqué selon le procédé d'enroulement-pultrusion, qui met en évidence un faciès de fissuration à l'interface entre les entretoises et les couches d'enroulement filamentaire ;
- [Fig.3] est une vue en coupe d'un rouleau fabriqué selon le procédé d'enroulement-pultrusion, qui met en évidence un faciès de fissuration radiale et circonférentielle dans les entretoises ;
- [Fig.4] est une vue en coupe d'un rouleau fabriqué selon le procédé d'enroulement-pultrusion, qui met en évidence un autre faciès de fissuration circonférentielle le long des couches d'enroulement filamentaire ;
- [Fig.5a], [Fig.5b], [Fig.5c] et [Fig.5d] illustrent chacune une partie de découpage d'un tableau répertoriant un ensemble de lots d'échantillons de test fabriqués et soumis à analyse pour apprécier l'influence de différents paramètres de mise en œuvre du procédé d'enroulement-pultrusion sur le phénomène de fissuration mis en évidences aux figures 2, 3 et 4 ;
- [Fig.6a], [Fig.6b], [Fig.6c] et [Fig.6d] retranscrivent les taux de fissuration obtenus pour l'ensemble des lots répertoriés aux figures 5a à 5d.

### DESCRIPTION DETAILLEE DE L'INVENTION

L'invention s'inscrit dans le cadre d'une étude visant à évaluer les opportunités de perfectionnement du procédé de fabrication par enroulement-pultrusion adapté à la fabrication de rouleaux composites, connu du document FR2871215B1.

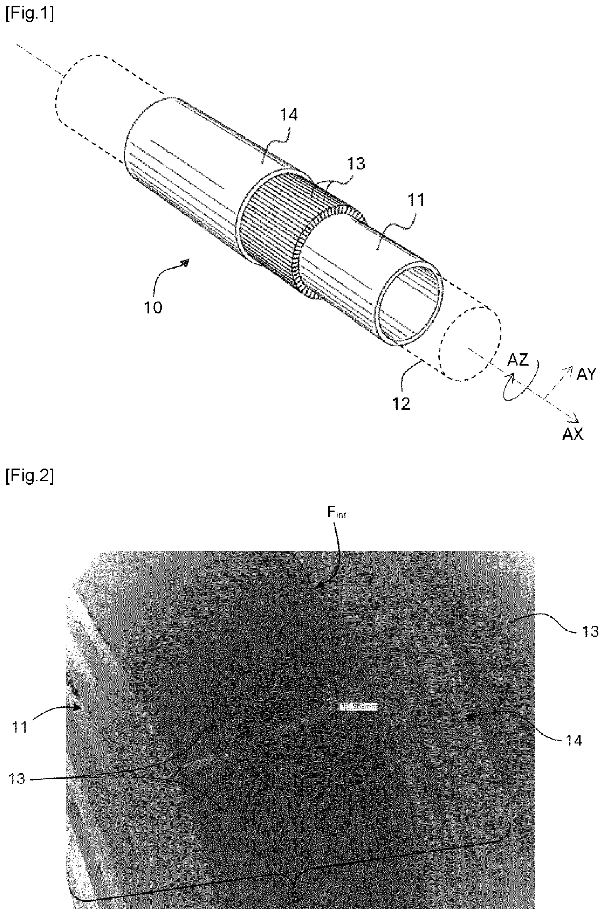

En référence à la figure 1, la mise en œuvre du procédé d'enroulement-pultrusion faisant l'objet du perfectionnement selon l'invention repose sur une étape de construction d'un brut de fabrication noté 10. Ce brut de fabrication se présente sous la forme d'au moins un sandwich S tubulaire résultant des sous-étapes successives de :
a) former une première couche 11 par enroulement filamentaire de fibres de carbone continues et imprégnées de résine autour d'un mandrin rotatif 12 d'axe longitudinal AX , cette première couche 11 délimitant intérieurement le sandwich S suivant une direction radiale notée AY qui est orthogonale à l'axe AX ;
b) rapporter des entretoises 13 en matériau composite à base de fibres de carbone, fabriqués en amont par pultrusion, sur la première couche 11 en étant avantageusement régulièrement espacées en périphérie, suivant une direction dite circonférentielle notée AZ ; puis
c) construire par enroulement filamentaire de fibres de carbone continues et imprégnées de résine une deuxième couche 14 radialement autour des entretoises 13 pour délimiter extérieurement le sandwich S.

Une fois le brut de fabrication 10 ainsi obtenu, il est préconisé, dans le cadre de la mise en œuvre du procédé d'enroulement-pultrusion adoptée par les inventeurs du présent perfectionnement, de procéder à une étape de cuisson pour aboutir à la polymérisation rapide et effective de la résine, notamment la résine constitutive des première et deuxième couches 11, 14.

En effet, contrairement à la résine de pultrusion déjà cuite, c'est-à-dire une résine au moins partiellement polymérisée, ou du moins majoritairement cuite, en étant tirée au travers d'une filière chauffante pour conférer aux entretoises 13 leur forme et leur très haute rigidité, la résine des couches 11, 14 d'enroulement filamentaire du brut de fabrication 10 se présente sous une forme crue, c'est-à-dire non-polymérisée.

Même si en pratique certaines résines d'enroulement filamentaire sont susceptibles de polymériser sans apport de chaleur, c'est-à-dire à température ambiante, la cuisson du brut de fabrication est privilégiée pour notamment :
- satisfaire une production à l'échelle industrielle, entendu qu'une polymérisation à température ambiante impose une immobilisation du mandrin 12 sur lequel est construit le brut de fabrication 10 pendant une durée significative, de l'ordre de quelques jours à plusieurs semaines ;
- s'affranchir d'un risque de polymérisation imparfaite des couches 11, 14 d'enroulement filamentaire, notamment à cœur et à leur interface avec les entretoises 13,
- écarter le risque d'une fragilisation de la résine par altération chimique due à sa tendance à l'absorption spontanée d'humidité à l'état cru. Une telle fragilisation conduit directement à un abattement des propriétés mécaniques finale du rouleau obtenu.

Ainsi, conformément à la mise en œuvre du procédé visé par le perfectionnement selon l'invention, un rouleau est formé moyennant les étapes successives de construction du brut de fabrication 10 et de cuisson dudit brut de fabrication 10.

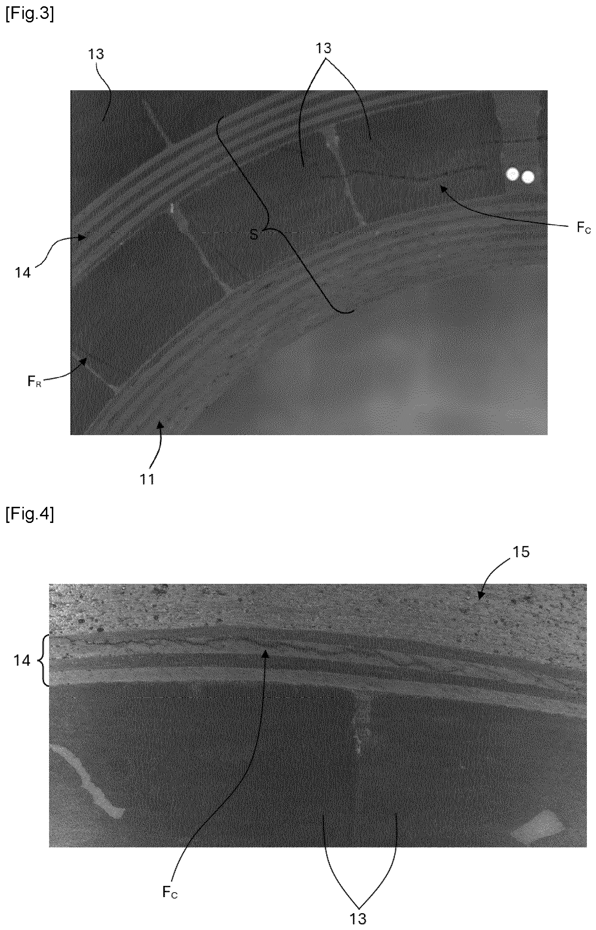

A noter que ce brut de fabrication 10 n'est pas rigoureusement limité à être constitué d'un seul sandwich S dans le cadre de l'invention. En pratique, un brut de fabrication 10 peut être également formé de plusieurs sandwichs S empilés les uns sur les autres, sous la forme d'un mille-feuilles, ou stratifié, avant d'être cuit. Concrètement, les étapes b) et c) de construction susmentionnées peuvent être répétées de manière cyclique pour former une série de sandwichs S radialement successifs. En pareil cas, ces sandwichs présentent deux à deux une couche d'enroulement filamentaire conjointe : la deuxième couche 14 délimitant extérieurement un sandwich S correspond à la première couche 13 du sandwich S construit au-dessus. Les exemples des figures 2 et 3 illustrent cet arrangement particulier.

Aussi, il peut être optionnellement retenu, sans sortir du cadre de la présente invention, de déposer un revêtement tendre, c'est-à-dire un revêtement sacrificiel adapté à l'usinage, autour du brut de fabrication 10, à savoir autour de la couche 14 qui délimite extérieurement le brut de fabrication 10. Ce revêtement tendre, visible et noté 15 dans l'exemple de la figure 4, est un consommable, non structurel, qui est destiné à être usiné en aval de la cuisson pour rectifier au besoin la forme en section circulaire du rouleau. Il est notamment préconisé lorsque le cahier des charges impose une tolérance de forme sévère. A titre d'exemple, un tel revêtement 15 peut être formé en voile de fibre de verre, en tissu de verre, en fibres non-tissés, en élastomère ou encore en résine pure ou chargée.

La multiplicité des essais de contrôle qualité effectués en production par les inventeurs a mis en évidence qu'une partie non négligeable des rouleaux ainsi formés sont assujettis à une problématique de fissuration qui est responsable d'un abattement des propriétés mécaniques. En détail, il a été observé de manière non systémique que 3% à 10% des rouleaux testés présentent des fissures, en particulier lors des cuissons courte (inférieures à 24h) à des températures supérieures à 60°C, voire supérieure à 80°C menant à un taux de polymérisation supérieur à 90% des rouleaux.

En référence aux figures 2, 3 et 4, l'appréciation visuelle en coupe transversale des rouleaux testés, à savoir suivant un plan de coupe normal à l'axe AX correspondant, a permis de distinguer trois faciès de fissuration :
- une fissuration, notée Fᵢₙₜ sur la figure 2, à l'interface pultrudé-enroulée, à savoir de délamination entre une couche d'enroulement filamentaire 11, 14 et au moins une des entretoises 13 radialement en vis-à-vis ;
- une fissuration radiale F_{R} et/ou circonférentielle F_{C} s'étendant au travers d'une ou plusieurs entretoises 13, tel que représenté en figure 3 ; ou encore
- une fissuration F_{C} circonférentielle s'étendant le long d'une couche d'enroulement filamentaire 11, 14, comme visible sur la figure 4.

L'observation de telles fissurations a conduit les inventeurs à s'interroger sur l'origine de ce phénomène. Il a ainsi été envisagé que ces fissurations découlent de la particularité de cuisson d'un matériau cuit et d'un matériau cru qui est inhérente au procédé d'enroulement-pultrusion : la co-cuisson simultanée des entretoises 13 déjà cuites et des couches d'enroulements 11, 14 crues serait génératrice de contraintes internes dans les bruts de fabrication 10.

Pour valider cette approche et établir sur cette base une loi phénoménologique de caractérisation du comportement en fissuration, une analyse comparative a été menée sur des échantillons de rouleaux. Cette analyse repose sur une variation de plusieurs paramètres contrôlables de mise en œuvre du procédé d'enroulement-pultrusion, ayant une incidence supposée sur la génération de contraintes internes durant la cuisson et/ou la résistance à l'apparition/la propagation de fissures, pour en quantifier l'influence.

Les paramètres « contrôlables » se distinguent des paramètres environnementaux qui sont peu maitrisables en production industrielle, ces paramètres environnementaux étant par exemple :
- la température de l'atelier pouvant varier entre 10°C et 40°C ;
- la température des outillages pouvant varier entre 10°C et 50°C ;
- l'hygrométrie de l'atelier comprise entre 20% et 90% ;
- le temps de fabrication pouvant varier entre 30 minutes et 600 minutes, mesuré entre le démarrage de la production et la cuisson du brut de fabrication 10 ;
- l'indice époxyde des résines d'enroulement filamentaire ;
- le taux d'amorçage de polymérisation de la résine d'enroulement filamentaire avant introduction en cuisson.

Il a ainsi été observé au cours de cette étude que l'occurrence de fissuration peut être limitée à un taux inférieur à 4% lorsque les entretoises 13 et les couches d'enroulements 11, 14 sont conditionnées de sorte à former des rouleaux présentant à la fois :
- une rigidité longitudinale suivant l'axe AX, autrement appelée module spécifique de flexion noté E1s, qui est comprise entre 52 300 KNm/Kg et 258 400 KNm/Kg ; et
- un ratio entre module de flexion E1 (exprimé en MPa) et le module en torsion (exprimé en MPa), désigné aussi par module transverse G, qui est compris entre 5 et 65.

Il a notamment été mis en évidence que le taux de fissurations peut être limité d'avantage quand la double condition susmentionnée est satisfaite et que :
- le pourcentage volumique de fibres de carbone dans le brut de fabrication 10 est constitué de plus de 35% dans les entretoises 13 et, corolairement, de moins de 65% dans les couches d'enroulements filamentaires 11, 14 ; et/ou
- les couches d'enroulements filamentaires 11, 14 sont formées suivant un angles de dépose supérieur ou égal à 30° relativement à l'axe AX.

Aussi, il a été observé que conditionner les entretoises 13 de sorte à ce qu'elles présentent une fraction volumique de fibre supérieure à 65%, idéalement comprise entre 65 et 75% avec moins de 1% de porosité, permet de tendre vers un taux de fissuration inférieur à 2,2% en combinaison avec les critères susmentionnés.

Conditionner les entretoises 13 et les couches d'enroulements filamentaires 11, 14 pour assurer une adhésion entre elles suffisante pour garantir une résistance en cisaillement, dit « lapshear », et en traction radiale supérieure à 15 MPa a notamment été qualifié comme permettant d'abaisser davantage le taux de fissuration en deçà de 2%

Enfin, il a été démontré que le respect des critères précédents et suivants contribue dans l'ensemble à limiter le taux de fissuration, jusqu'à valeur quasi-nulle :
- construire le brut de fabrication 10 avec des entretoises 13 partiellement cuites, à savoir dont la résine n'est pas totalement polymérisée, de l'ordre de 70 et 90% en taux de cuisson, et idéalement entre 75% et 85% ;
- conditionner les entretoises 13 et les couches d'enroulements filamentaires 11, 14 de sorte à garantir une résistance à la fissuration G1c supérieure à 100J/m², et avantageusement supérieure à 150J/m².

Dans la suite seront présentés les résultats d'essais sur la base desquels les critères susmentionnés de mise en œuvre du procédé selon l'invention, permettant de limiter l'apparition de fissurations, ont été formulés.

### Matrice d'essai et fabrication

Dans le cadre de cette étude, une pluralité d'échantillons de rouleaux, ont été fabriqués dans des conditions standards d'atelier, en les instrumentant de divers capteurs comme des jauges d'effort. Après validation de la conformité des échantillons au moyen des capteurs, ils ont été répartis en deux-cents lots distincts comportant chacun entre deux et quatre échantillons de paramètres sensiblement identiques.

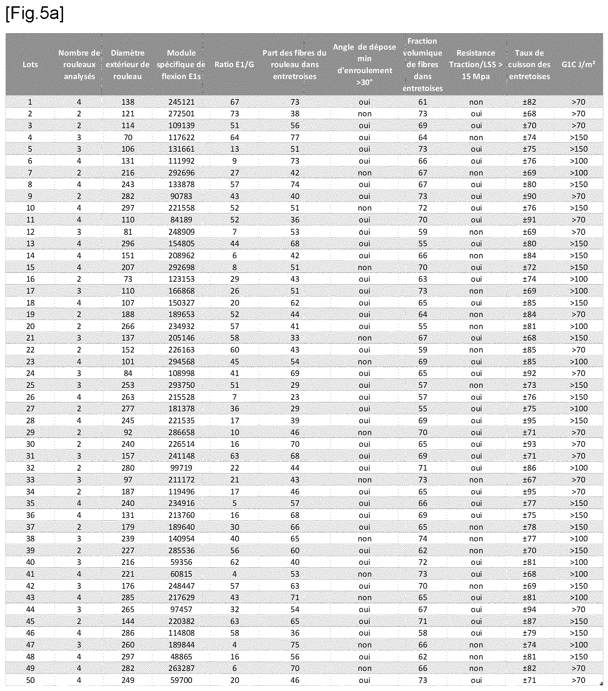

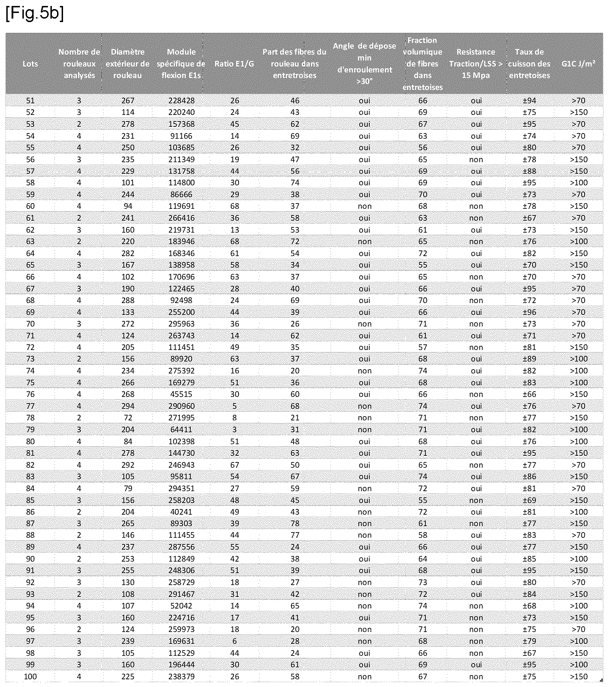

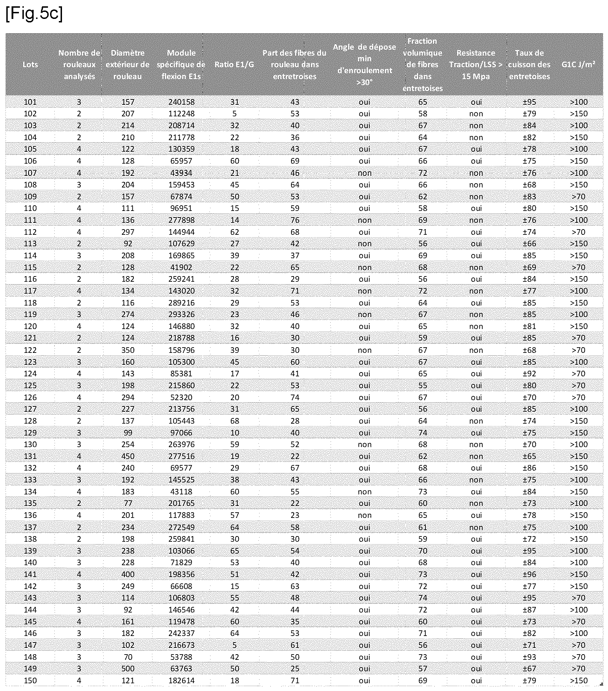

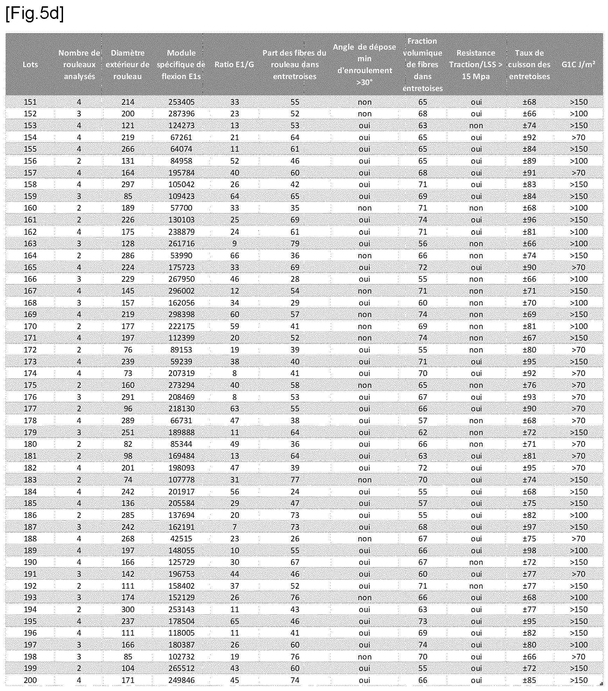

Comme répertorié colonne par colonne dans les tableaux illustrés aux figures 5a à 5d, les lots de rouleaux 1 à 200 fabriqués se distinguent les uns des autres par la combinaison des paramètres, aussi appelés régresseurs d'étude, suivants :
- le diamètre extérieur mesuré en mm ;
- le module spécifique E1s, à savoir la rigidité longitudinale spécifique suivant AX, exprimé en KNm/Kg ;
- le ratio E1/G (modules en MPa), à savoir le ratio entre rigidité longitudinale et rigidité en torsion ;
- la part des fibres de carbone contenues dans les entretoises 13 sur le volume total des fibres de carbone du brut de fabrication 10 ;
- l'angle induit durant la formation des couches d'enroulement filamentaire 11, 14 relativement à l'axe AX, et plus spécifiquement la validation ou non d'une valeur d'angle supérieure à 30 ;
- la fraction volumique qu'occupe les fibres de carbone dans les entretoises 13 constitutives du brut de fabrication 10, correspondant à l'inverse de la fraction volumique associée à la résine pultrudée ;
- la résistance en lapshear et en traction radiale (notée Traction/LSS), exprimée en MPa, et plus spécifiquement la validation ou non d'une valeur de résistance mesurée supérieure à 15 MPa ;
- le taux de cuisson des entretoises 13 utilisées pour construire le ou les sandwich(s) S constitutifs des bruts de fabrication 10, en amont de l'étape de co-cuisson conjointement avec les couches d'enroulement filamentaire 10, 14 ; et
- la résistance à la fissuration G1c, mesurée en J/m², entre les entretoises 13 et les couches d'enroulement filamentaire 10, 14 ;

### Appréciation du taux de fissuration et dépouillement des résultats

Le taux de fissurations de chaque lot d'échantillons correspond dans le cadre de cette étude à une occurrence de fissurations déterminée dans les mêmes conditions opératoires suivantes :
- une série de coupes transversales, à savoir normale à l'axe AX, sont réalisées sur chaque échantillon puis appréciées par Microscopie numérique ou par Tomographie ;
- sur chacune des images générées par Microscopie numérique ou Tomographie , de dimensions 10mmx10mm, toute fissure est identifiée ; puis
- le taux de fissuration pour chaque lot est calculé comme le ratio du nombre d'images comptabilisées avec fissure(s) visible(s) sur le nombre d'images dépourvues de fissure visible.

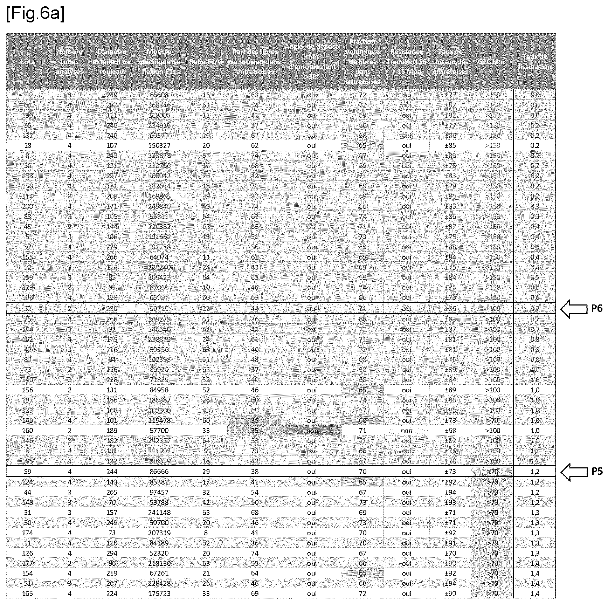

Les tableaux des figures 6a à 6d correspondent aux tableaux des figures 5a à 5d qui ont été à la fois enrichis des valeurs de taux de fissurations déterminées et aménagés en ordonnant les lots suivant un ordre croissant du taux de fissurations. Cet aménagement permet d'avoir une lecture de bas en haut du gain octroyé par les différents critères susmentionnés à respecter pour tendre vers une limitation, jusqu'à annulation, de l'occurrence de fissuration.

### Premier critère établi

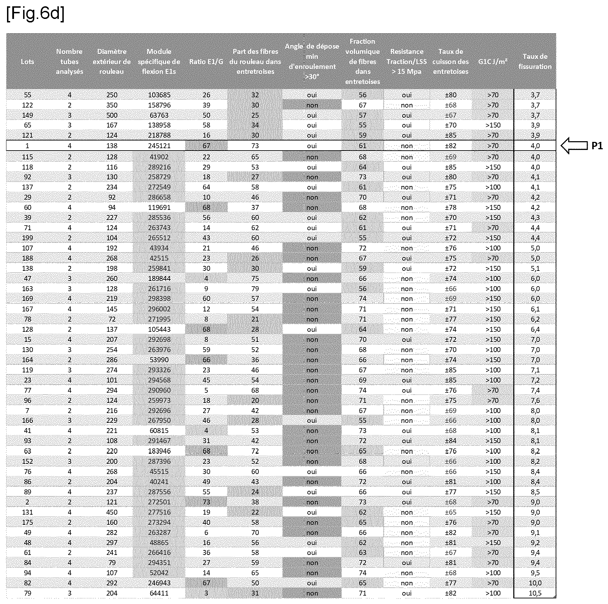

En référence à la figure 6d, nous pouvons directement identifier un premier palier, noté P1, en deçà duquel les échantillons des lots :
- présentent un taux de fissuration supérieur à 4%, jusqu'à 10,5% pour le lot relevé comme le plus sévèrement affecté par les fissurations dans le cadre de cette étude ; et
- ne respectent pas la double-conditions de présenter un module spécifique de flexion E1s compris entre 52 300 KNm/Kg et 258 400 KNm/Kg et un ratio E1/G compris entre 5 et 65.

Eu égard au palier P1 identifié, il ressort de manière surprenante que conditionner la mise œuvre du procédé d'enroulement-pultrusion de sorte à produire des rouleaux respectant un ratio E1/G compris entre 5 et 65 pour un module spécifique de flexion E1s compris entre 52 300 KNm/Kg et 258 400 KNm/Kg permet de limiter le taux de fissuration à une valeur en deçà de 4%.

Il est ainsi préconisé dans le cadre de l'invention de satisfaire à ce critère en premier lieu, sous la forme d'une condition limite de mise en œuvre du procédé.

A l'analyse, ce plafonnement du taux de fissuration à une valeur en deçà de 4% trouve son fondement dans l'interaction entre les couches d'enroulés 11, 14 et les entretoises 13 sous l'effet de la dilatation différentielle.

En pratique, quand le brut de fabrication 10 monte en température durant l'étape de cuisson, les entretoises 13 et les couches d'enroulements 11, 14 ont tendance à se dilater. A l'inverse, le refroidissement après cuisson, jusqu'à température ambiante, induit le retreint des entretoises 13 et couches d'enroulements 11, 14.

Par nature, les entretoises pultrudées 13, du fait qu'elles sont déjà cuites, ont tendance à se dilater significativement plus que les couches d'enroulements 11, 14. Une telle dilation différentielle est génératrice de contraintes internes, en particulier durant le refroidissement post-cuisson, du fait que les couches d'enroulements 11, 14 se sont figées par polymérisation de la résine. Comme il est compris, le rétreint des entretoises 13, qui cherchent à revenir dans leur état d'origine, génère un effort radial important sur les couches d'enroulements 11, 14 qui se sont à l'inverse rigidifié à l'état dilaté.

En paramétrant la construction du brut de fabrication 10 conformément à ce premier critère revient concrètement à garantir un module transversal G assez important pour que les couches d'enroulement filamentaire puissent s'opposer à la dilatation des entretoises 13. En entravant la dilatation des entretoises 13 durant la montée en température de cuisson, il s'ensuit une limitation du rétreint au retour à température ambiante et donc une limitation des contraintes internes générée dans le rouleau produit.

### Deuxième et troisième critères additionnels

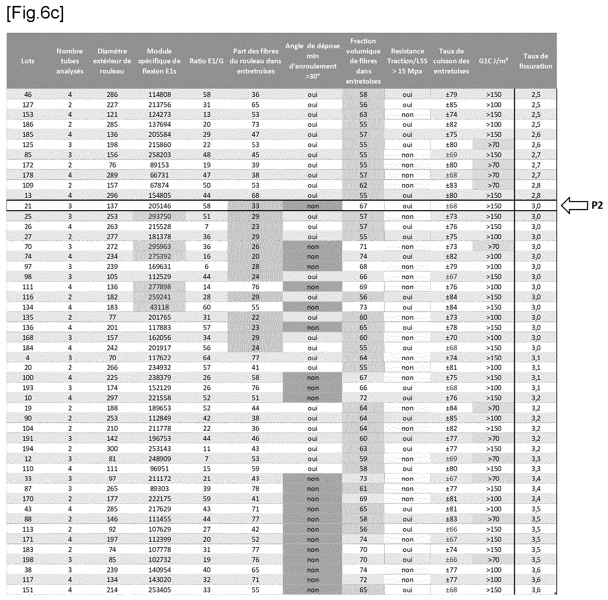

La figure 6c met en évidence un palier P2 marquant une distinction des lots par rapport au pourcentage volumique de fibres de carbone et à l'angle de dépose des fibres d'enroulement filamentaire.

En détail, il apparait au regard de ce palier P2 qu'il est permis de limiter le taux de fissuration à une valeur inférieure à 3% dès lors que l'on respecte l'un des critères additionnels suivants :
- la part volumique de fibres de carbone dans le brut de fabrication 10 correspond à moins de 65% dans les couches d'enroulement filamentaire 11, 14 et, corolairement, plus de 35% dans les entretoises; et
- les couches d'enroulement filamentaire 11, 14 sont formées suivant un angle de dépose supérieur ou égal à 30° relativement à l'axe AX.

Ces deux critères contribuent en pratique isolément et en synergie à augmenter le module transversale G, et donc d'atteindre les valeurs de ratio E1/G conformes au premier critère établi, en plus de limiter encore davantage le taux de fissuration par rapport au respect uniquement de ce premier critère.

En effet, plus l'angle des fibres d'enroulement est grand, à savoir s'éloigne de l'orientation longitudinale suivant AX, jusqu'à 90°, plus ces fibres sont aptes à reprendre les efforts radiaux et donc à s'opposer à la dilatation des entretoises 13. Aussi, augmenter la part volumique des fibres, par rapport au total dans le brut de fabrication 10, au niveau des enroulements filamentaires, jusqu'à 65%, permet de directement augmenter le module transverse G.

### Quatrième critère additionnel

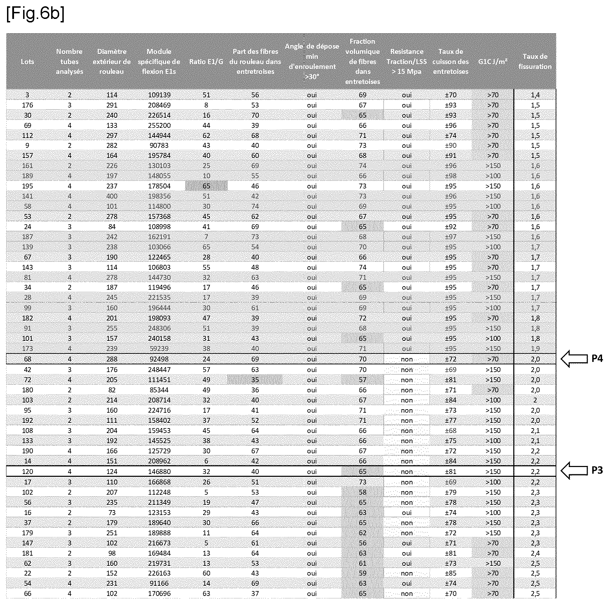

En référence à la figure 6b, un palier noté P3 est identifié comme marquant la limite d'influence de la fraction volumique de fibres de carbone des entretoises 13 produites dans le cadre de cette étude.

En détail, ce palier P3 met en exergue que les rouleaux fabriqués avec des entretoises 13 formées avec un taux de fibres supérieur à 65%, autrement dit avec un taux de résine inférieur à 35%, affichent des taux de fissuration inférieurs à 2,2% en conjonction avec le respect des autres critères susmentionnés. Il ressort en outre de cette étude qu'une teneur de fibres comprise entre 65 et 75% dans les entretoises 13, avantageusement avec moins de 1% de porosité, assure les meilleurs résultats.

Bien que conformer les entretoises 13 avec une teneur en fibres de carbone supérieure à 65% est contre-indiqué dans la littérature par souci de manquer de résine pour assurer une bonne cohésion d'ensemble, cette étude a permis de surmonter ce préjugé pour tendre vers une limitation accrue des fissurations.

Du fait que la résine présente un coefficient de dilatation significativement supérieur au carbone, cette étude enseigne ainsi qu'augmenter le taux de fibres à un niveau supérieur à 65% permet de réduire suffisamment la dilation intrinsèque des entretoises 13 durant la cuisson pour garantir une réduction des efforts radiaux exercés sur les couches d'enroulement 11, 14. Une telle réduction des efforts radiaux appliqués sur les couches d'enroulements 11, 14 tend notamment à limiter les fissures circonférentielle F_{C}, telles qu'identifiées sur la figure 4, apparaissant spécifiquement dans celles-ci.

### Cinquième critère additionnel

Un palier P4 est également identifié sur la figure 6b. Ce palier P4 témoigne que dans le cas où l'adhésion entre les entretoises 13 et les couches d'enroulement 11, 14 est suffisante pour garantir une résistance en lapshear et en traction supérieure à 15 MPa, il est assuré de limiter le taux de fissuration en deçà de 2% dans le respect des autres critères susmentionnés.

Le respect d'un tel seuil de résistance en lapshear et en traction à 15MPa permet en pratique de contrer l'apparition des fissures d'interface F_{INT} observables sur la figure 2.

Il convient de noter que l'adhésion est fonction de plusieurs paramètres dont notamment les natures et compatibilités chimiques des résines utilisées pour former les entretoises 13 et les couches d'enroulement filamentaire 11, 14.

Pour tendre vers cette valeur de résistance en lapshear et en traction, il est avantageusement suggéré dans le cadre de l'invention de :
- conformer les entretoises 13 à base de résine époxy à durcisseur anhydride et ;
- construire les couches d'enroulement filamentaire de fibres de carbone 11, 14 à base d'époxy à durcisseur amine.

Il ressort de la présente étude comparative que cette combinaison de résines est particulièrement puissante pour satisfaire une résistance en lapshear et en traction supérieure à 15 MPa entre les entretoises 13 et les couches d'enroulement 11, 14.

Il s'agit toutefois de souligner que l'invention n'est pas rigoureusement limitée à ces deux natures de résine. En effet, toute combinaison de résines permettant de satisfaire au critère d'adhésion identifié, à savoir de garantir résistance en lapshear et en traction supérieure à 15 MPa, peut être retenue sans sortir du cadre de l'invention.

Il a également été révélé durant cette étude que l'état plus ou moins avancé de polymérisation de la résine des entretoises pultrudées 13 utilisées durant l'étape de construction du brut de fabrication 10, à savoir avant sa cuisson, a une incidence sur la résistance effective en lapshear et en traction.

Comme mentionné précédemment, au stade de la mise en forme du brut de fabrication 10, la résine constitutive des entretoises 13 utilisée a d'ores et déjà été soumise à une chauffe pour polymériser afin degarantir une certaine rigidité. Il ressort toutefois de cette étude qu'il est préférable d'opter pour une polymérisation incomplète de la résine des entretoises 13 utilisées pour construire le brut de fabrication 10. En effet, cette particularité offre l'opportunité à la résine résiduelle des entretoises 13, à savoir la portion de résine qui n'a pas encore terminée sa polymérisation, de se mêler localement à la résine constitutive des couches d'enroulement filamentaire 10, 14 durant leur co-cuisson, à savoir durant la cuisson globale du brut de fabrication 10 en aval.

Un tel mélange des résines octroie alors un ancrage mécanique à l'interface entre les entretoises 13 et les couches d'enroulement 11 après cuisson du brut de fabrication 10, ce qui contribue à garantir le critère susmentionné de résistance en lapshear et en traction supérieure à 15 MPa.

Eu égard aux valeurs d'essais recueillies, il est avantageusement préconisé dans le cadre de l'invention que le taux de cuisson de la résine des entretoises 13 soit de l'ordre de 70% à 90% au stade de la construction du brut de fabrication 10. Les meilleurs résultats ont notamment été relevés pour un taux de cuisson de la résine des entretoises 13 compris entre 75% et 85%. Le taux de cuisson de la résine des entretoises 13 a été évalué dans le cadre de cette étude menée au moyen de mesures d'enthalpie résiduelle directement après pultrusion, à savoir avant leur utilisation pour construire les sandwichs S des bruts de fabrication 10.

A noter qu'abaisser le taux de cuisson à une valeur inférieure à 70% est contre-indiqué dans le cadre de l'invention. En effet, une polymérisation trop faible induit un risque d'altérations diverses des entretoises pultrudées 13, tel qu'un encrassement, une perte de géométrie, de la fissuration, ou encore une plastification puis une hydrolyse par absorption d'humidité pendant leur stockage.

### Sixième critère additionnel

Enfin, la figure 6a permet de relever en dernier lieu deux paliers, notés P5 et P6, faisant état du gain de conditionner les entretoises 13 et les couches d'enroulement filamentaire 11, 14 de sorte à garantir à leur interface une résistance à la fissuration G1c d'une valeur supérieure respectivement à 100J/m² et 150J/m² après cuisson du brut de fabrication.

En détail, il apparait que paramétrer la mise en œuvre du procédé d'enroulement-pultrusion de sorte à atteindre une valeur de résistance à la fissuration G1c 100J/m² permet de plafonner le taux de fissuration à 1,2%. Dépasser 150J/m² en valeur de résistance à la fissuration G1c réduit encore davantage le taux de fissuration à une valeur en deçà de 0,7%.

Il ressort de cette analyse que justifier d'une résistance à la fissuration G1c au moins supérieure à 100J/m², et avantageusement supérieure à 150J/m² à l'interface entre les entretoises 13 et les couches d'enroulement 11, 14, permet de s'opposer efficacement à la propagation de toute fissuration d'interface Fᵢₙₜ naissante pour les confiner. Le départ de telles fissurations d'interface Fᵢₙₜ est généralement observé au niveau de petites singularités géométriques d'entretoises 13 qui forment des nids de sur-contraintes pendant la cuisson du brut de fabrication 10.

### Procédé selon l'invention et applications

Sur la base de l'analyse comparative effectuée, nous avons pu ainsi mettre en évidence les différents critères de mise en œuvre du procédé d'enroulement-pultrusion à respecter conformément à l'invention pour tendre vers une limitation du taux de fissuration dans les rouleaux produits.

Quand bien même le respect de l'ensemble des critères édictés correspond à la solution la plus optimale pour limiter l'occurrence de fissurations, au point même d'aboutir à une situation de « zéro fissure », il est bien compris que l'invention n'est pas pour autant limitée à cette particularité. En pratique, tout ou partie de ces critères peuvent être respectés en partant du moins stricte au plus stricte, à savoir en commençant par le premier critère jusqu'au sixième. Le choix du respect de l'ensemble des critères ou seulement d'une partie de ces critères en série dépend concrètement du taux de fissurations admissible pour une application donnée.

Aussi, il convient de noter que le procédé selon l'invention n'est pas limité à la fabrication de rouleaux comme dans le cas de l'exemple, à savoir des pièces de révolution à section longitudinale constante. En effet, la mise en œuvre du procédé d'enroulement-pultrusion conforme à l'invention permet de fabriquer diverses structures tubulaires, autrement dit diverses structures creuses.

## Revendications

1. Procédé pour la réalisation d'une structure composite tubulaire d'axe longitudinal (AX), comme par exemple un tube composite de révolution autour de l'axe longitudinal (AX), le procédé comprenant successivement :
- une étape de formation d'un brut de fabrication (10) moyennant la construction par empilement de matière d'au moins un sandwich tubulaire (S) d'axe longitudinal (AX), ledit sandwich tubulaire (S) comprenant deux couches d'enroulement filamentaire (11, 14) à base de résine crue et fibres de carbone, et une série d'entretoises pultrudées (13) à base de fibres de carbone et résine au moins partiellement cuite, les entretoises pultrudées (13) étant agencées radialement à l'axe longitudinal (AX) entre les deux couches d'enroulement filamentaire (11, 14) ; et
- une étape de cuisson du brut de fabrication (10) pour obtenir la structure tubulaire composite ;
ledit au moins un sandwich (S) du brut de fabrication (10) étant formé durant l'étape de construction de sorte à respecter une distribution volumique de fibres de carbone de plus de 35% dans les entretoises pultrudés (13) et de moins de 65% dans les couches d'enroulement filamentaire 11, 14), rapportée au volume total de fibres de carbone dans le brut de fabrication (10) ; et
les couches d'enroulement (11, 14) étant formées durant l'étape de construction du brut de fabrication (10) en respectant un angle de dépose des fibres qui est supérieur à 30° par rapport à l'axe longitudinal.

2. Procédé selon la revendication 1, dans lequel les entretoises (13) utilisées pour former ledit au moins un sandwich (S) durant l'étape de construction du brut de fabrication (10) présentent une fraction volumique de fibres supérieure à 65%.

3. Procédé selon la revendication 2, dans lequel les entretoises (13) présentent une fraction volumique de fibres comprise entre 65% et 75%.

4. Procédé selon la revendication 2 ou 3, dans lequel les entretoises (13) et les couches d'enroulement (11, 14) sont paramétrées de manière à présenter une résistance en lapshear et en traction radiale à leur interface qui est supérieure à 15 MPa à l'issue de l'étape de cuisson du brut de fabrication (10).

5. Procédé selon la revendication 4, dans lequel l'étape de construction du brut de fabrication (10) est opérée en :
- rapportant des entretoises (13) qui sont conformée à base de résine époxy à durcisseur anhydride et ;
- formant des couches d'enroulement filamentaire (11, 14) à base d'époxy à durcisseur amine.

6. Procédé selon la revendication4 ou 5, dans lequel la résine des entretoises (13) utilisées durant l'étape de construction du brut de fabrication (10) présente un taux de cuisson compris entre 70% à 90%.

7. Procédé selon la revendication 6, dans lequel la résine des entretoises (13) utilisées durant l'étape de construction du brut de fabrication (10) présente un taux de cuisson compris entre 75% et 85%.

8. Procédé selon l'une quelconque des revendication 4 à 7, dans lequel les entretoises (13) et les couches d'enroulement (11, 14) sont paramétrées de manière à présenter une résistance à la fissuration (G1c) à leur interface au moins supérieure à 100 J/m², avantageusement supérieure à 150 J/m², à l'issue de l'étape de cuisson du brut de fabrication (10).
